# EUROPÄISCHE PATENTSCHRIFT

(11) **EP 0 776 840 B1**
(45) Veröffentlichungstag und Bekanntmachung des Hinweises auf die Patenterteilung: **14.11.2001**
(21) Anmeldenummer: 96113899.7
(22) Anmeldetag: 30.08.1996
(51) Int. Cl.: B65G 47/252

(54) **Wendevorrichtung**
Turning device
Dispositif de retournement

(30) Priorität: 30.11.1995 DE 19544646
(43) Veröffentlichungstag der Anmeldung: 04.06.1997
(73) Patentinhaber: Hans Lingl Anlagenbau und Verfahrenstechnik GmbH & Co. KG, D-89231 Neu-Ulm (DE)
(72) Erfinder: Göppel, Otto, 86498 Kettershausen (DE)

(56) Entgegenhaltungen:
- EP-A- 0 654 432
- DE-A- 2 550 321
- US-A- 2 157 642
- US-A- 2 501 224
- US-A- 4 798 278

## Beschreibung

Die Erfindung betrifft eine Wendevorrichtung für Produkte, die während des Transports auf einer Fördereinrichtung gewendet werden müssen, nach dem Oberbegriff des Anspruches 1.

Derartige Wendevorrichtungen sind zum Beispiel beim Transport von Ziegeleiprodukten, die zum Brennen auf Ofenwagen auf ihren Schnittflächen stehend gesetzt werden müssen oder die nach dem Brand beim Entladen der Ofenwagen zur Bildung von für den Versand geeigneten Paketen gewendet werden müssen, erforderlich.

Aus dem deutschen Gebrauchsmuster G 74 19 016 der Georg WILLY AG ist es bekannt, quaderförmige Formlinge, insbesondere Formlinge, umzusetzen und dabei zu kippen. In diesem Gebrauchsmuster ist eine Fördereinrichtung für die Formlinge und ein drehbares Wendeorgan zum Wenden der Formlinge offenbart. Das Wendeorgan durchgreift dabei während seiner Drehung die Förderebene der Fördereinrichtung. Desweiteren weist das Wendeorgan Ausnehmungen für die Aufnahme eines Formlings auf. In diesen Ausnehmungen sind Stützflächen gebildet, die einen Winkel von mindestens 90° miteinander bilden. Als Wendeorgan ist ein Drehkreuz bekannt, welches drei oder vier Arme aufweist. Falls die Formlinge nicht gewendet werden sollen, kann ein derartiges Wendeorgan abgesenkt werden, so daß die Formlinge über das Wendeorgan auf der Fördereinrichtung ungestört weitertransportiert werden können.

Nachteilig an solchen Vorrichtungen ist, daß sie nur in Verbindung mit Riemen oder Kettenbahnen verwendet werden können, die quer zur Förderrichtung Abstände aufweisen, damit das Wendeorgan auch diese Abstände greifen kann, um die Formlinge aufzunehmen. Sind jedoch solche Abstände erforderlich, ist es nicht möglich, die Wendevorrichtung für Produkte zu verwenden, die während der Förderung quer zur Förderrichtung voll unterstützt werden müssen. Solche Produkte sind zum Beispiel Ziegel mit verzahnten Stirnseiten oder U-Schalen, die zunächst mit den Schenkeln in vertikaler Richtung, in Richtung der schmalen Kanten der Schalen, transportiert werden, sowie Platten, einzeln oder in Reihen, bei denen die schmalen Kanten in Förderrichtung gerichtet sind.

Es ist deshalb eine Aufgabe der vorliegenden Erfindung, eine Wendevorrichtung zu schaffen, mit der Produkte, die quer zur Förderrichtung im An- oder Abtransport volle Unterstützung benötigen, im Durchlauf gewendet werden können.

Die Aufgabe ist erfindungsgemäß durch die im kennzeichnenden Teil des Anspruches 1 dargestellten Merkmale gelöst. Weitere Ausgestaltungen ergeben sich aus den Unteransprüchen.

Die mit der Erfindung erzielbaren Vorteile bestehen insbesondere darin, daß alle Ziegelformate, auch solche die quer zu ihrer Förderrichtung voll unterstützt gefördert werden müssen, in gleicher Weise einfach gewendet werden können. Weiterhin ist es vorteilhaft, daß die Transportbahn der Fördereinrichtung nicht durchgehend sein muß, da auch, falls die Formlinge nicht gewendet werden sollen, der Transport über die Wendevorrichtung durch die eigenen Transportmittel der Wendevorrichtung erfolgen kann.

Ein Ausführungsbeispiel der Erfindung ist in den Zeichnungen dargestellt und wird im folgenden näher beschrieben. Es zeigen:

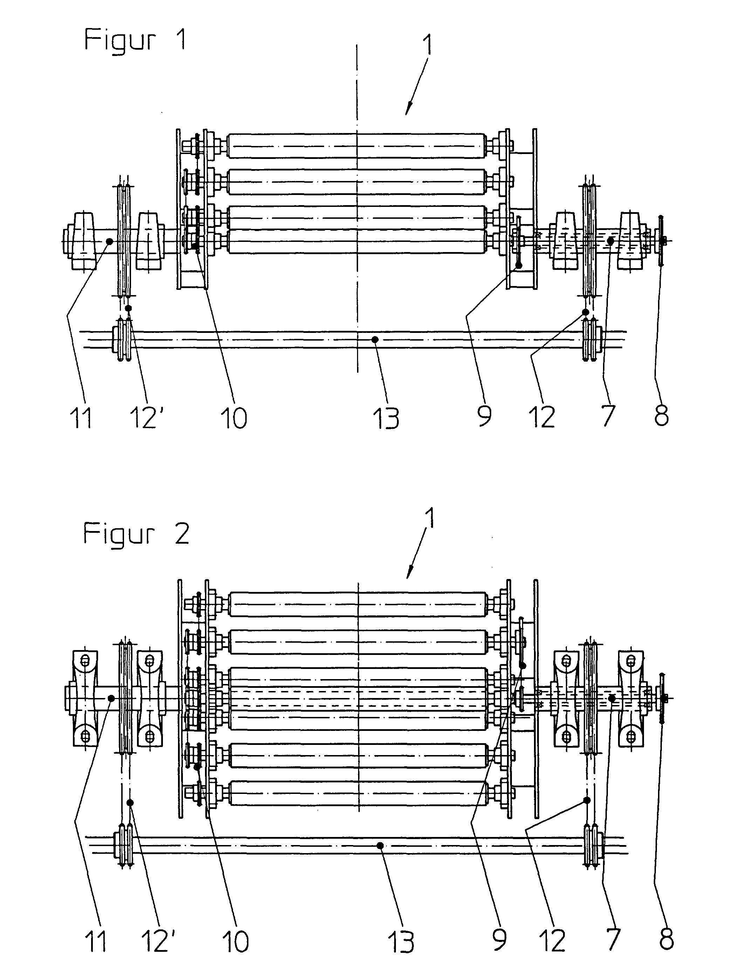

- Figur 1: eine Vorderansicht der erfindungsgemäßen Wendevorrichtung,
- Figur 2: eine Aufsicht auf die erfindungsgemäße Wendevorrichtung,

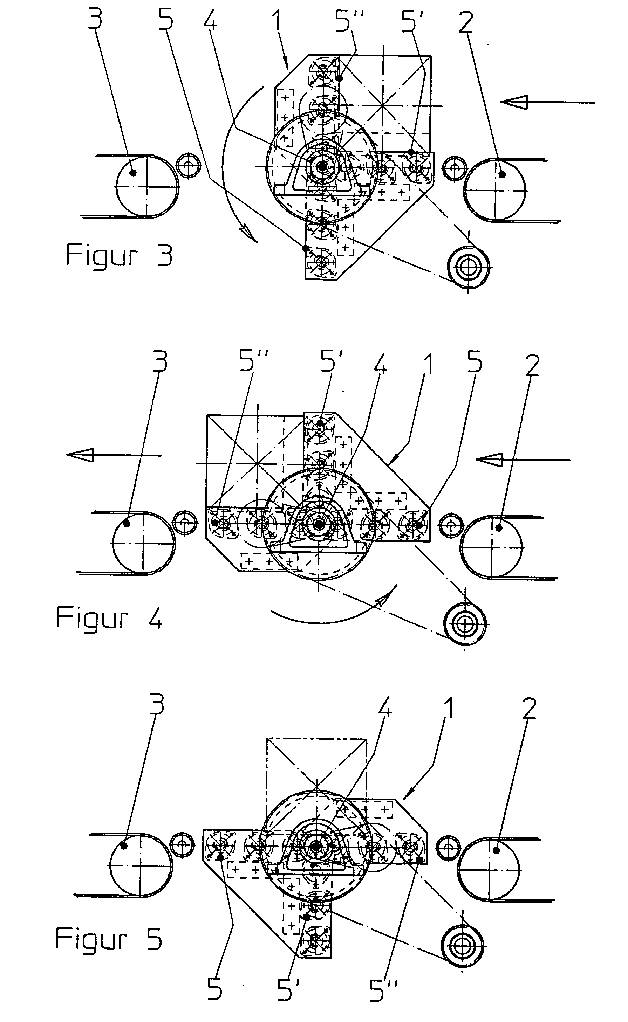

- Figuren 3, 4 und 5: eine Seitenansicht verschiedener Betriebsstellungen der erfindungsgemäßen Wendevorrichtung.

Die Wendevorrichtung 1 ist zwischen zwei Teilen 2 und 3 einer Fördereinrichtung um eine Achse 4 drehbar gelagert. Die Wendevorrichtung 1 besteht aus drei Armen 5, 5', 5", die im Winkel von 90° bzw. 180° zueinander angeordnet sind. Jeder der Arme 5, 5', 5" weist eine Transportvorrichtung, mittels derer die Formlinge, die auf der Fördereinrichtung transportiert werden, von dem ersten Teil 2 der Fördereinrichtung übernommen werden, daraufhin in Richtung des zweiten Teils 3 der Fördereinrichtung durch die Wendevorrichtung 1 gefördert werden und dabei gleichzeitig gewendet oder auch nicht gewendet werden können und an den zweiten Teil 3 abgegeben werden. Die Transportvorrichtung aller drei Arme 5, 5', 5", die vorzugsweise als angetriebene, sich in der Aufnahmeebene für die Formlinge erstreckende Rollenbahn ausgebildet ist, sind gemeinsam in gleicher Richtung mittels einer Antriebswelle 8 durch einen nicht gezeigten Antrieb angetrieben. Die Antriebswelle 8 ist konzentrisch mit einer Hohlwelle 7 angeordnet. Der Antrieb der Rollen der Arme der Wendevorrichtung 1 erfolgt über Vorgelege 9 und 10.

Die Wendevorrichtung 1 ist durch die Hohlwelle 7 und die Welle 11 im Rahmen der Fördereinrichtung gelagert und wird über Vorgelege 12, 12' sowie eine Welle 13 von einem nicht gezeigten Antrieb angetrieben. Dieser Antrieb besteht aus einem Bremsmotor, der beim Wendebetrieb die Wendevorrichtung 1 so antreibt, daß zwei Viertelumdrehungen jeweils einer halben Umdrehung folgt. Genauer erfolgt eine Viertelumdrehung, bezüglich der Oberseite der Förderebene in Förderrichtung, falls der Arm 5' nach oben oder entgegen der Förderrichtung zeigt und eine halbe Umdrehung, falls der Arm 5' in Förderrichtung zeigt. Auf diese Art und Weise werden die Formlinge von dem Arm 5 oder 5' aufgenommen, um 90° gedreht und von dem Arm 5' oder dem Arm 5" wieder dem zweiten Teil 3 der Fördereinrichtung zugeführt. Falls die Formlinge nicht gewendet werden sollen, das heißt im Durchlaufbetrieb, erstrecken sich die Arme 5 und 5" parallel zur Förderebene und der Arm 5' ist senkrecht nach unten gerichtet. Hierbei nimmt der Arm 5" die Formlinge vom ersten Teil 2 der Fördereinrichtung auf, woraufhin die Formlinge durch die Transportmittel der Arme 5" und 5 über das Wendeorgan 1 gefördert werden und dem zweiten Teil 3 der Fördereinrichtung vom Arm 5 zugeführt werden.

Im Durchlaufbetrieb erfolgt der Antrieb der Rollenbahnen mit kontinuierlicher Fördergeschwindigkeit, vorteilhafter Weise mit der gleichen Fördergeschwindigkeit wie die der Fördereinrichtung 2, 3. Im Wendebetrieb erfolgt der Antrieb der Rollenbahnen vorzugsweise intermittierend. Dabei werden die Rollenbahnen angetrieben, wenn die Formling von dem ersten oder dem zweiten Teil 2, 3 der Fördereinrichtung aufgenommen bzw. abgegeben werden und nicht angetrieben bei der Drehung des Wendeorgans 1. Hierbei ist es möglich, für die Wendevorrichtung 1 und die Rollenbahnen die gleiche Antriebswelle zu verwenden, da beide nicht gleichzeitig angetrieben werden. Die Wendevorrichtung 1 und die Rollenbahnen können beispielsweise jeweils über ihre Vorgelege für ihren Antrieb an die Antriebswelle angekoppelt werden.

## Patentansprüche

1. Wendevorrichtung (1) in einer Fördereinrichtung (2,3) für Formlinge, bei der die Wendevorrichtung als ein Drehkreuz ausgebildet ist, das die Formlinge mittels Arme (5,5',5"), die sich von der senkrecht zur Förderrichtung erstreckenden Achse des Drehkreuzes nach außen erstrecken, aufnehmen, um seine Achse drehen und wieder auf die Fördereinrichtung abgeben kann, **dadurch gekennzeichnet, daß** die Arme (5,5',5") des Drehkreuzes (1) eigene Transportmittel zum Transport der Formlinge aufweisen.

2. Wendevorrichtung nach Anspruch 1, **dadurch gekennzeichnet, daß** das Drehkreuz drei Arme (5,5',5") aufweist, wobei zwei Arme (5,5") einen Winkel von 180° einschließen und der dritte Arm (5') mit den jeweils beiden anderen Armen (5,5") einen Winkel von 90° einschließt.

3. Wendevorrichtung nach einem der vorhergehenden Ansprüche, **dadurch gekennzeichnet, daß** als Transportmittel sich in der Aufnahmeebene für die Formlinge erstreckende angetriebene Rollen vorgesehen sind.

4. Wendevorrichtung nach einem der vorhergehenden Ansprüche, **dadurch gekennzeichnet, daß** die Transportmittel und/oder die Wendevorrichtung über Vorgelege (9, 10, 12, 12') angetrieben sind.

5. Wendevorrichtung nach einem der vorhergehenden Ansprüche, **dadurch gekennzeichnet, daß** die Transportmittel kontinuierlich angetrieben sind.

6. Wendevorrichtung nach den Ansprüche 1 bis 4, **dadurch gekennzeichnet, daß** die Transportmittel angetrieben sind, falls die Wendevorrichtung (1) sich nicht dreht und die Transportmittel nicht angetrieben sind, falls sich die Wendevorrichtung (1) zum Wenden der Formlinge dreht.

7. Wendevorrichtung nach Anspruch 6, **dadurch gekennzeichnet, daß** die Wendevorrichtung (1) und die Transportmittel von einer gleichen Antriebswelle, an welche sie jeweils für einen Antrieb angekoppelt werden können, angetrieben sind.

8. Wendevorrichtung nach den Ansprüche 2 bis 7, **dadurch gekennzeichnet,**
**daß** die Wendevorrichtung so angetrieben ist, daß, falls die Formlinge gewendet werden sollen, sie um eine Viertelumdrehung bezüglich der Oberseite der Förderebene in Förderrichtung gedreht wird, falls der dritte Arm (5') während der Aufnahme des zu wendenden Formlings nach oben oder entgegen der Förderrichtung zeigt und sie um eine halbe Umdrehung gedreht wird, falls der dritte Arm (5') in Förderrichtung zeigt, und
**daß**, falls die Formlinge nicht gewendet werden sollen, der dritte Arm (5') nach unten zeigt.

## Claims

1. Tilting device (1) for mouldings in a conveyor system (2, 3), whereby the tilting device is formed by a turnstile for taking up the mouldings, tilting them around its axis and depositing them again on the conveyor system by means of arms (5, 5', 5"), which extend radially from the turnstile axis, which is positioned vertically to the transport direction, **wherein** the arms (5, 5', 5") of the turnstile (1) have their own individual transport means for the transport of the mouldings.

2. Tilting device according to claim 1, **wherein** the turnstile is equipped with three arms (5, 5', 5") whereby two arms (5, 5") are enclosing an angle of 180° and the third arm (5') is enclosing an angel of 90° to each of the other two arms (5, 5")

3. Tilting device according to any one of the previous claims, **wherein** driven rollers are provided as transport means for the mouldings in the take-up area.

4. Tilting device according to any one of the previous claims, **wherein** the transport means and/or the tilting device are driven by reduction gears (9, 10, 12, 12').

5. Tilting device according to any one of the previous claims, **wherein** the transport means are continuously driven.

6. Tilting device according to any one of claims 1 to 4, **wherein** the transport means are driven when the tilting device (1) is not rotating and the transport means are not driven when the tilting device (1) is rotating to tilt the mouldings.

7. Tilting device according to claim 6, **wherein** the tilting device (1) and the transport means are driven by the same drive shaft, to which they can be coupled for one drive each.

8. Tilting device according to claims 2 to 7, **wherei**n the tilting device is driven in a way that if the mouldings are to be tilted it is turned by a quarter rotation in transport direction regarding the top surface of the transport level, if the third arm (5') points upward or against transport direction while taking up the moulding to be tilted, and it is turned by a half rotation if the third arm (5') points in transport direction, and
the third arm (5') points downward if the mouldings are not be tilted.

## Revendications

1. Dispositif de culbutage (1) dans une installation de transport (2, 3) pour produits crus, le dispositif de culbutage étant construit comme croix tournante équipée des bras (5, 5', 5") et destinée à la réception des produits crus, à les tourner autour de son axe et à les déposer de nouveau sur l'installation de transport moyennant lesdits bras, qui s'étendent radialement de l'axe de croix tournante, ledit axe s'étendant verticalement au sens de transport; **caractérisé en ce que** les bras (5, 5', 5") de la croix tournante (1) comportent des moyens de transport propres pour le transport des produits crus.

2. Dispositif de culbutage selon la revendication 1, **caractérisé en ce que** la croix tournante comporte trois bras (5, 5', 5")', deux bras (5, 5") formant un angle de 180 degrés et le troisième bras (5') formant an angle de 90 degrés avec chacun des autres deux bras (5, 5").

3. Dispositif de culbutage selon l'une ou l'autre des revendications précédentes, **caractérisé en ce qu'**on a prévu des rouleaux entraînés comme moyen de transport, lesdits rouleaux s'étendant dans le niveau de réception pour les produits crus.

4. Dispositif de culbutage selon l'une ou l'autre des revendications précédentes, **caractérisé en ce que** les moyens de transport et/ou le dispositif de culbutage sont entraînés par renvois (9, 10, 12, 12').

5. Dispositif de culbutage selon l'une ou l'autre des revendications précédentes, **caractérisé en ce que** les moyens de transport ont un entraînement continu.

6. Dispositif de culbutage selon les revendications 1 à 4, **caractérisé en ce que** les moyens de transport sont entraînés, si le dispositif de culbutage (1) ne pivote pas, et que les moyens de transport ne sont pas entraînés, si le dispositif de culbutage (1) pivote pour le culbutage des produits crus.

7. Dispositif de culbutage selon la revendication 6, **caractérisé en ce que** le dispositif de culbutage (1) et les moyens de transport sont entraînés par le même arbre d'entraînement auquel ils peuvent être couplés pour un entraînement à la fois.

8. Dispositif de culbutage selon les revendications 2 à 7, **caractérisé en ce que**, si les produits crus sont à culbuter, le dispositif de culbutage est entraîné de manière qu'il est tourné par un quart de tour au sens de transport rélatif à la surface supérieure du niveau de transport, si le troisième bras (5') montre vers le haut ou contrairement au sens de transport durant la réception du produit cru à culbuter, et qu'il est tourné par un demi tour, si le troisième bras (5') montre le sens de transport, et que, si les produits crus ne sont pas à culbuter, le troisième bras (5') montre vers le bas.
